# EUROPEAN PATENT SPECIFICATION

(11) **EP 2 015 081 B1**
(45) Date of publication and mention of the grant of the patent: **10.12.2014**
(21) Application number: 07252814.4
(22) Date of filing: 13.07.2007
(51) Int. Cl.: G01P 3/488, G01D 5/20

(54) **Movement probe, particularly speed sensor, for aerospace vehicles**
Bewegungssonde, insbesondere Geschwindigkeitssensor, für Luftfahrzeuge
Sonde à mouvement, en particulier capteur de vitesse, pour véhicule aérospatial

(30) Priority: 12.07.2007 CA 2593553
(43) Date of publication of application: 14.01.2009
(73) Proprietor: WESTON AEROSPACE LIMITED, Farnborough Hampshire GU14 7PW (GB)
(72) Inventor: Turner, Nigel Philip, Farnborough, Hampshire GU14 7PW (GB)
(74) Representative: Vleck, Jan Montagu

(56) References cited:
- EP-A- 1 355 131
- EP-A- 1 522 825
- US-A- 3 252 024
- US-A- 3 876 927

## Description

This invention relates to an aerospace movement probe and in particular to a probe for detecting movement of objects such as jet engine shafts.

The use of magnetic sensors in co-operation with, for example, one or more projections or teeth on a shaft to give an output from which shaft rotational speed or torque may be determined is well known. In such sensors, a voltage, induced in a coil by changes in the magnetic flux pattern of a magnetically energised pole piece, caused by movement of a body of magnetic material in the field from the pole piece is detected and/or measured.

The rotational speed of a rotating element can be determined by measuring the frequency of the periodic signal produced in the coil as one or more markers or elements on the surface of the rotating element passes or pass through the field from the pole piece.

The rotational speed of a shaft in an aero engine can be measured by fixing a magnetic phonic wheel to the shaft. The phonic wheel includes a number of teeth or protrusions and rotates with the shaft so that a measurement of the speed of the teeth or protrusions on the phonic wheel can be used to determine the rotational speed of the shaft on which the phonic or toothed wheel is mounted.

The torque transmitted by a rotating shaft can be measured, for example, by fixing a tubular structure around the shaft whose twist is to be measured, such that one end of the tubular structure is fixed to the shaft while the other end is loose. By measuring the relative time delay between the passing of a marker or element on the surface of the shaft and a corresponding one on the loose end of the tubular structure, the relative angular displacement between the rotating shaft and the tubular structure at the loose end can be measured from which the torque can then be determined.

US-A-3,876,927 (Gee) describes a magnetic pickup sensor for sensing the relative motion between the sensor and a body of magnetic material. The device disclosed in US-A-3,876,927 includes a multi-turn coil directly coiled around and over a copper sleeve which is itself placed around a pole piece. Movement of a body of magnetic material through the magnetic flux generated by the magnet induces a signal voltage in the multi-turn coil. The copper sleeve acts as a low resistance shorted turn and reduces the rate of increase of the signal voltage in the coil wound around the sleeve as the speed of the motion being sensed. The copper sleeve is placed inside the coil so that heat generated by circulating currents in the shorted turn is transmitted by conduction to the pole piece and magnet through which it is dissipated.

The device shown US 3,876,927 (Gee) has a bulky sensing end and is therefore not suitable for aerospace applications where it is often necessary to site sensors in areas of limited space and high temperature such as in a jet engine.

In certain situations, it is highly undesirable to employ a magnetic sensor having a high voltage output. For example, when employing a magnetic sensor in an explosive environment, such as a gas turbine engine, in order to avoid the occurrence of sparks it is vital that the amplitude of the output voltage of the sensor is limited.

Limiting the amplitude of the output voltage protects the electronic measuring circuitry against overvoltage. The employment of electronic voltage limiters, such as diodes, in such situations is undesirable due to the reliability and redundancy problems associated with them.

US - A-7,148,679 (Proctor) discloses a probe for sensing movement of a body of magnetic material comprising a magnetically energisable pole piece, a closed loop electrical circuit having a first end which is wound around the pole piece and forms a pole piece coil inductively coupled to the pole piece, the arrangement being such that movement of a body of magnetic material relative to the pole piece induces a current in the closed loop circuit, and a second end, remote from the pole piece, which forms a transformer primary coil. A transformer secondary coil is inductively coupled to the primary coil, and terminated by a load resistance and means for measuring an output signal from the secondary coil. The primary and secondary coils form a transformer such that a current in the primary coil induces a voltage across the secondary coil. One or more shorting turns of a conductor are coiled around and through the secondary coil to inductively couple the primary and secondary coils.

US 3,252,024 (Loudon) discloses an ele4ctric pulse generating means for a car engine ignition systems, comprising a magnet, a magnetically energisable core or pole piece adjacent and magnetically coupled to the magnet, a washer extending around the pole piece and a coil of conductive material into which the core or the pole piece partially extends.

US 3,876,927 (Gee et al) discloses a magnetic sensor for sensing movement of a body of magnetic material comprising a magnet, a magnetically energisable pole piece adjacent and magnetically coupled to the magnet and a sensing coil (18) through which the pole piece extends.

A problem with the probe of US 7,148,679 is that it is relatively difficult and expensive to manufacture because of the awkwardness of coiling the shorting turn or turns around and through the output or secondary coil. Furthermore, it has been found that where there are a plurality of secondary or output coils coupled to a single primary coil, the degree of attenuation for each of the secondary or output coils can vary and may even be insufficient as a result of the differing relative locations of the shorting turn or turns and the different secondary or output coils.

According to the invention there is provided a transformer probe as defined in claim 1 to which reference should now be made. The inventor of the subject application has realised that it is possible to produce a probe which is both easier (and therefore cheaper) to make, and which works better by taking the counterintuitive step of replacing a shorting turn comprised of a coil passing through and around the secondary or output coil with a shorting turn formed by one or more conductive washers placed around or adjacent the pole piece itself.

The conductive attenuation washers may be made from a shim or spacer and are therefore readily and easily available and/or made in many thicknesses controlled to fine tolerances. Furthermore a number of different washers can be stacked in order to achieve a desired attenuation.

Using a washer placed at the front of the probe around the pole piece is also more efficient than the arrangement shown in US-7,148,679 as the front of the probe (i.e. area around pole piece) is the greatest area of flux change meaning that the same attenuation can be achieved by a smaller shorting device and therefore allow for a smaller overall coil envelope.

As discussed above, the device shown in US 3,876,927 (Gee) is not suitable for aerospace applications where there is limited space and high temperatures at the front or sensing end of the probe. Furthermore, the washer arrangement of the current invention has important advantages over a sleeve arrangement of the type shown in US 3,876,927 (Gee). A washer added at the front of the probe piece can be added after a coil has been wound around the pole piece and can therefore be relatively easily replaced, removed or added to. The inner sleeve arrangement of Us 3,876,927 (Gee) has the coil wound onto the sleeve which means that the sleeve cannot be removed or replaced or added to without removing the coil. If it transpires, for example, that the degree of attenuation provided by a particular washer or combination of washers is insufficient, probes according to the current invention can have the level of attenuation changed by the relatively easy operation of adding or removing a washer or washers. In effect, the subject invention allows one to "tune" the level of attenuation required.

Preferred embodiments of the invention will now be described, by way of example only, with reference to the accompanying drawings. The figures and accompanying description are only for the purposes of illustrating one or more preferred embodiments of the invention and are not to be construed as unifying the invention, limiting the invention, or limiting the appended claims. The skilled man will readily and easily envisage alternative embodiments of the invention.

In the figures:
Figure 1 shows schematically a probe according to a preferred embodiment of the invention for sensing movement of a magnetic toothed wheel;
Figure 2 is a perspective view of a probe mounting including a probe according to a preferred embodiment of the invention embodying the invention;
Figure 3 shows a graph of output voltage against wheel speed, as a percentage of maximum wheel speed, for a probe according to preferred embodiments of the invention such as those illustrated in figures 1 and 5, having an attenuation washer and probes of the same construction but having no attenuation washer; and
Figure 4 shows schematically an alternative embodiment of the invention where the attenuation washer is used in conjunction with a transformer probe of the type described in US-A-4,739,260.

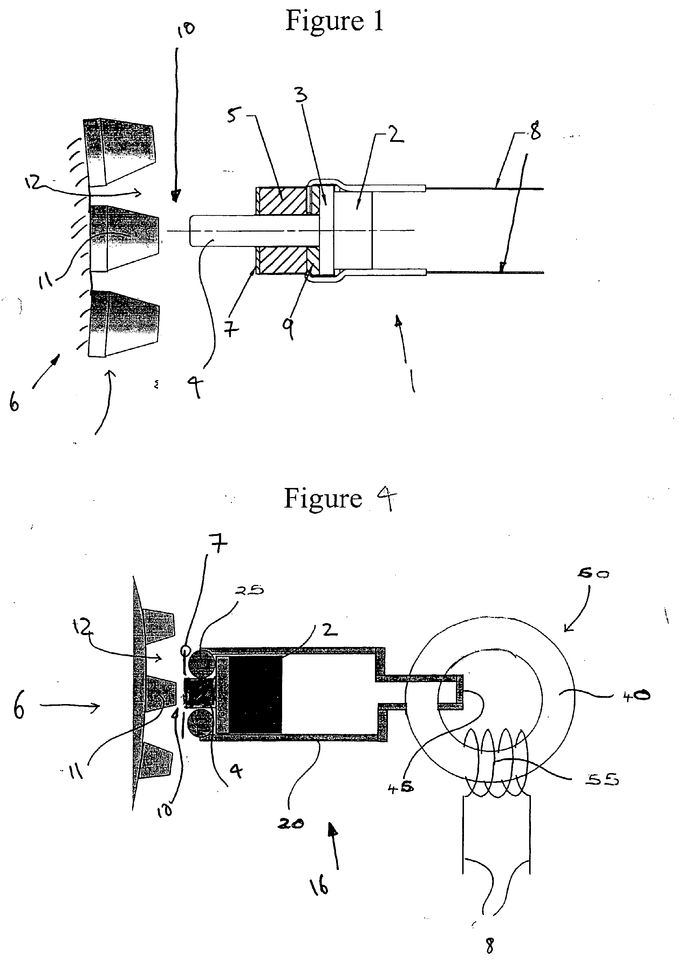

The speed probe 1 shown in figure 1 has a permanent magnet 2 and associated pole piece 3,4. The pole piece has an initial flat portion 3 adjacent the magnet 2 and a projecting element 4 on which a coil 5 is wound and which, in use, faces towards the body of magnetic material 6 whose movement or speed is to be measured or monitored. There is non-conductive spacer 9 between the flat initial portion 3 of the pole piece and the coil 5. An attenuation washer 7 made from a conductive material (for example copper or aluminum) is located on the projecting portion 4 of the pole piece at the end of the pole piece distal from the magnet 2. The ends 8 of the coil wire lead out from the coil 5 to measuring circuitry (not shown).

The mode of operation of the probe shown in Figure 1 when employed as a speed sensor will now be described.

In Figure 1, the probe is shown in a first position relative to a toothed wheel 6 of magnetic material, the rotational speed of which is to be measured. The magnetic flux in the pole piece 3, 4 of the probe depends upon the strength of the magnet 2 and upon the magnetic circuit reluctance of the circuit consisting of the magnet 2, pole piece coil 5, air gap 10, wheel 6 and the air path returning magnetic field from the wheel 6 to the magnet 2.

In the first position shown in Figure 1, the pole piece end 4 is opposite one of the teeth 11 of the wheel 6, there is a small air gap 10 between the pole piece 4 and the tooth 11 and the magnetic flux in the pole piece 3,4 is high as the reluctance of the magnetic circuit is low. When the wheel 6 rotates, the position of the pole piece 4 relative to the wheel teeth changes from the first position shown in Figure 1 to a second position wherein the pole piece 4 is opposite a gap 12 between two of the teeth on the wheel 6. In the second position, the air gap 10 between the pole piece 4 and the teeth is large and the magnetic flux in the pole piece 3,4 is low as the reluctance of the magnetic circuit is high.

As the wheel 6 rotates and the position of the pole piece 3,4 relative to the teeth on the wheel changes between the first and second positions, the magnetic flux in the pole piece 3,40 oscillates between high and low values respectively. The changes in the magnet flux of the pole piece 3,4 caused by the variation in the reluctance of the magnetic circuit as the wheel rotates, induces a voltage in the pole piece 3,4, in the coil 5, and in the conductive attenuation washer 7. In the preferred embodiment of the invention and as discussed above, the resistance of the coil 5 is very low, such that a high current flows in the coil 5.

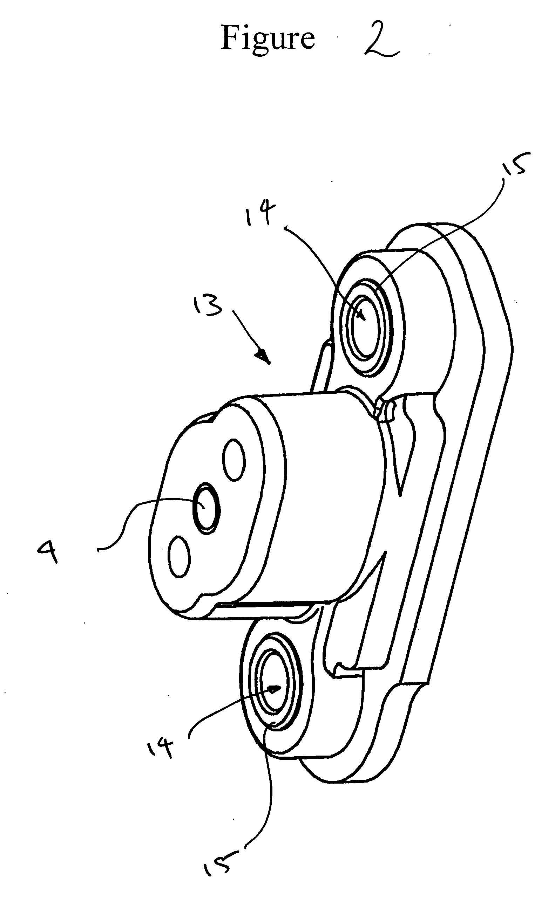

Figure 2 is a perspective view of a probe mounting including a probe of the type described above in connection with figure 1. The only portion of the probe assembly of figure 1 visible in figure 2 is the end of the pole piece 4. The rest of the probe is supported inside a casing 13. The casing may be of a plastics (alternative embodiments could use metal or any other suitable material) such as PEEK (a high temperature resistance engineered thermoplastic available under the trade mark ARLON). For the embodiment with a plastics casing shown in figure 2, the casing has two bolt holes 14 which receive fixing bolts (not shown). The upper edges of the bolt holes 14 have a metal ring or insert 15 which is connected (not shown) to the probe coil leads (not shown) of the probe supported inside the casing. The fixing bolts can therefore be used to connect the probe to measuring circuitry.

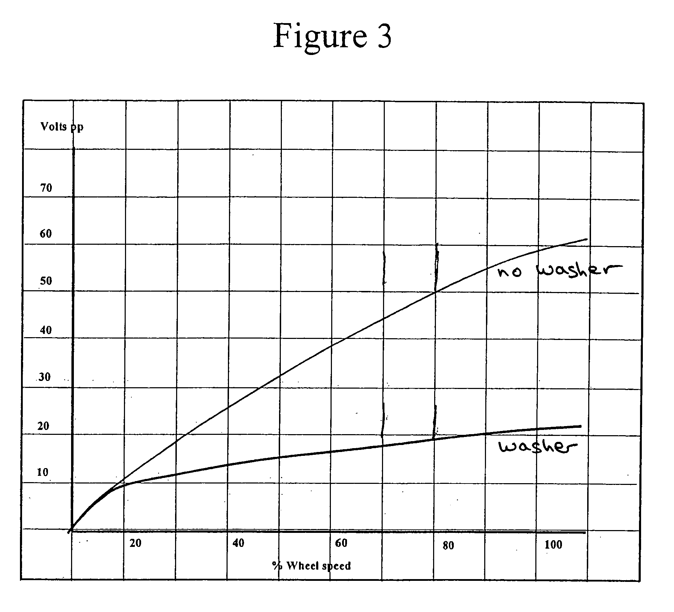

Figure 3 shows a graph of output voltage against wheel speed as a percentage of maximum wheel speed for a probe according to a preferred embodiment of the invention having a washer and a probe of the same construction having no washer. With no washer (and therefore shorting turn), the amplitude of the output voltage signal of the output coil of the probe increases at an approximately linear rate with increasing wheel speed. In contrast, the rate of increase of the amplitude of the output voltage signal of the probe 1 according to the preferred embodiment of the invention, having a washer 7, decreases markedly as the wheel speed increases, such that the amplitude of the output voltage of the probe at high wheel speeds is limited or increases slowly.

The washer 7 and coil 5 both load the pole piece 3,4. As the speed of the toothed wheel increases (i.e. frequency of teeth passing pole piece increases) the voltage induced in the washer increases and therefore a large current is flowing in the washer generating a strong magnetic field which is opposing the field in the pole piece and therefore reducing the increase of voltage in the coil 5. In the absence of the attenuation washer 7, the voltage across the coil 5 would increase continuously as the speed of the toothed wheel increased and, as discussed above, this has potentially catastrophic consequences for the electronic circuits connected to the coil 5.

The washer, however, absorbs some (an increasing proportion as the voltage across the pole piece increases) of the energy and therefore attenuates the voltage across the coil 5. As the speed (i.e. frequency of passage of teeth past pole piece) increases, attenuation increases and therefore the washer 7 acts to limit or restrict increase or rate of increase of voltage across coil and thereby reduces risk of overvoltage, sparks and/or overheating.

Figure 4 illustrates a transformer probe of the type described n US-A-7,148,679 but modified to have the inventive attenuation washer arrangement described above in connection with figure 1.

The transformer probe 16 shown in Figure 4 has a housing (not shown) containing a primary closed loop circuit 20 of electrically conductive material. The primary circuit may be formed from copper wire, preferably with a diameter of 1-2 mm, or from any other conductor with low DC resistance such as, for example, steel or bronze.

The primary circuit preferably has a low DC resistance so as to have a low load in comparison to that of the primary coil 45. For low frequency operation, where the primary circuit resistance is R₁ and the primary coil inductance is L₂, R₁<2πfL₂. The inductance of the primary coil is likely to be of the order of 1-2 µH and so the resistance of the conducting primary circuit is typically 1-20 mΩ.

A first end 25 of the primary circuit 20 is wound around pole piece 4 of a permanent magnet 2 so as to form a pole piece coil 25. The first end of the primary circuit with the magnet 2 is mounted at the front end of the housing. The other end of the primary circuit 20, distant from the first end 25, distant from the pole piece 4, is wound around a magnetic core 40, mounted towards the other end of the housing 15, to form a primary coil 45 of a transformer 50. A second coil 55 is wound around the magnetic core 40 to form a secondary coil of the transformer 50. The secondary or output coil 55 is connected by a pair of wires or leads 8 to a load resistance and measuring apparatus which for simplicity have been omitted from the figures. In the preferred embodiment of the invention the load resistance is typically 1-20 kΩ.

A conductive washer 7 is placed over the pole piece 4 to attenuate the output voltage in the way described above for the embodiment of figure 1. The washer acts as a shorting turn.

It will also be appreciated that whilst Figures 1,2 and 5 illustrate embodiments with only a single output coil 5 and washer 7, it is possible and contemplated to have greater numbers of both or either. If, say, four outputs are required it may be appropriate to have four output coils all wound around the pole piece 3,4. As discussed above it is also possible to have multiple washers.

## Claims

1. A probe for sensing movement of a body of magnetic material in an aero engine comprising:
a magnet;
a magnetically energisable pole piece adjacent and magnetically coupled to the magnet;
a conductive washer extending around the pole piece; a sensing circuit or coil comprising at least one turn of conductive material wound around the pole piece and
located between the conductive washer and the magnet; wherein the probe is configured such that, in use, movement of the body of magnetic material past the pole piece induces voltages across the sensing circuit or coil, and across the conductive washer, and wherein as the speed of movement of the body of magnetic material increases, the voltage induced across, and the current induced in, the conductive washer increases generating a magnetic field which opposes the field in the pole piece so as to attenuate the voltage induced across the sensing circuit or coil.

2. A probe according to claim 1 wherein the at least one turn of conductive material comprises a coil.

3. A probe according to claim 2 wherein the coil is terminated by a load resistance and means for measuring an output signal from the coil.

4. A probe according to any preceding claim wherein the sensing circuit comprises an electrical circuit having at least one turn of conductive material wound around and inductively coupled to the pole piece, the arrangement being such that movement of a body of magnetic material relative to the pole piece induces a current in the sensing circuit, and a second portion, remote from the pole piece, which forms a transformer primary coil;
a transformer secondary coil, inductively coupled to the primary coil formed by the second portion of the sensing circuit, and terminated by a load resistance and means for measuring an output signal from the secondary coil,
wherein the primary and secondary coils form a transformer such that a current in the sensing circuit induces a voltage across the secondary coil; and
the washer is inductively coupled to the primary coil.

5. A probe according to any preceding claim wherein the conductive washer is made from copper or aluminium.

6. A probe according to any preceding claim including two or more conductive washers extending around the pole piece.

7. An aerospace probe according to any preceding claim.

8. An aero engine including a probe according to any preceding claim.

9. A method of restricting the voltage across the sensing circuit or coil of an aerospace probe for sensing movement of a body of magnetic material in an aero engine, the probe comprising a magnet, a magnetically energisable pole piece adjacent and magnetically coupled to the magnet, and a sensing circuit or coil comprising at least one turn of conductive material wound around the pole piece such that movement of the magneric material past the pole piece induces a voltage across the seinsing circuit or coil,
the method including the step of providing a conductive washer extending around the pole piece such that, in use, movement of the body of magnetic material past the pole piece induces voltages across the sensing circuit or coil, and across the conductive washer, and wherein as the speed of movement of the body of magnetic material increases, the voltage induced across, and the current induced in, the conductive washer increases generating a magnetic field which opposes the field in the pole piece so as to attenuate the voltage induced across the sensing circuit or coil.

## Patentansprüche

1. Sonde zum Erfassen von Bewegungen eines Körpers aus magnetischem Material in einem Luftfahrzeugtriebwerk, die Folgendes umfasst:
einen Magnet;
ein magnetisch erregbares Polstück neben und magnetisch gekoppelt mit dem Magnet;
eine leitende Scheibe, die um das Polstück herum verläuft; eine(n) Erfassungsschaltkreis oder -spule, der/die wenigstens eine Umdrehung von leitendem Material umfasst, das um das Polstück gewickelt ist und sich zwischen der leitenden Scheibe und dem Magnet befindet; wobei die Sonde so konfiguriert ist, dass beim Gebrauch eine Bewegung des Körpers von magnetischem Material an dem Polstück vorbei Spannungen über den/die Erfassungsschaltkreis oder -spule und über die leitende Scheibe induziert, und wobei mit zunehmender Bewegungsgeschwindigkeit des Körpers aus magnetischem Material die/der in der leitenden Scheibe induzierte Spannung und Strom zunehmen, so dass ein Magnetfeld erzeugt wird, das dem Feld in dem Polstück entgegenwirkt, um die über den/die Erfassungsschaltkreis oder -spule induzierte Spannung zu dämpfen.

2. Sonde nach Anspruch 1, wobei die wenigstens eine Umdrehung von leitendem Material eine Spule umfasst.

3. Sonde nach Anspruch 2, wobei die Spule durch einen Lastwiderstand und Mittel zum Messen eines Ausgangssignals von der Spule abgeschlossen wird.

4. Sonde nach einem vorherigen Anspruch, wobei der Erfassungsschaltkreis Folgendes umfasst: einen elektrischen Schaltkreis mit wenigstens einer Umdrehung von leitendem Material, das um das Polstück gewickelt und induktiv damit gekoppelt ist, wobei die Anordnung derart ist, dass eine Bewegung eines Körpers aus magnetischem Material relativ zu dem Polstück einen Strom in dem Erfassungsschaltkreis induziert, und einen zweiten Teil, fern von dem Polstück, der eine Transformator-Primärspule bildet;
eine Transformator-Sekundärspule, die induktiv mit der vom zweiten Teil der Erfassungsschaltung gebildeten Primärspule gekoppelt ist und von einem Lastwiderstand und Mitteln zum Messen eines Ausgangssignals von der Sekundärspule abgeschlossen wird,
wobei die Primär- und die Sekundärspule einen Transformator bilden, so dass ein Strom im Erfassungsschaltkreis eine Spannung über die Sekundärspule induziert; und
die Scheibe induktiv mit der Primärspule gekoppelt ist.

5. Sonde nach einem vorherigen Anspruch, wobei die leitende Scheibe aus Kupfer oder Aluminium gefertigt ist.

6. Sonde nach einem vorherigen Anspruch, die zwei oder mehr um das Polstück herum verlaufende leitende Scheiben aufweist.

7. Luft- oder Raumfahrtsonde nach einem vorherigen Anspruch.

8. Luftfahrzeugtriebwerk mit einer Sonde nach einem vorherigen Anspruch.

9. Verfahren zum Beschränken der Spannung über den/die Erfassungsschaltkreis oder -spule einer Luft- und Raumfahrtsonde zum Erfassen von Bewegungen eines Körpers aus magnetischem Material in einem Luftfahrzeugtriebwerk, wobei die Sonde Folgendes umfasst: einen Magnet, ein magnetisch erregbares Polstück neben und magnetisch gekoppelt mit dem Magnet, und eine(n) Erfassungsschaltkreis oder -spule, der/die wenigstens eine Umdrehung von leitendem Material umfasst, das um das Polstück gewickelt ist, so dass eine Bewegung des magnetischen Materials an dem Polstück vorbei eine Spannung über den/die Erfassungsschaltkreis oder -spule induziert,
wobei das Verfahren den Schritt des Bereitstellens einer um das Polstück herum verlaufenden leitenden Scheibe beinhaltet, so dass beim Gebrauch eine Bewegung des Körpers aus magnetischem Material an dem Polstück vorbei Spannungen über den/die Erfassungsschaltkreis oder -spule und über die leitende Scheibe induziert, und wobei mit zunehmender Geschwindigkeit der Bewegung des Körpers aus magnetischem Material die/der über die leitende Scheibe induzierte Spannung und Strom zunehmen, so dass ein Magnetfeld erzeugt wird, das dem Feld in dem Polstück entgegenwirkt, um die über den/die Erfassungsschaltkreis oder -spule induzierte Spannung zu dämpfen.

## Revendications

1. Sonde pour détecter le mouvement d'un corps de matériau magnétique dans un moteur aéronautique, comprenant :
un aimant;
une pièce polaire excitable magnétiquement adjacente et couplée magnétiquement à l'aimant;
une rondelle conductrice s'étendant autour de la pièce polaire; un circuit ou enroulement de détection comprenant au moins un tour d'un matériau conducteur enroulé autour de la pièce polaire et
située entre la rondelle conductrice et l'aimant; où la sonde est configurée de telle sorte que, en emploi, le mouvement du corps de matériau magnétique au-delà de la pièce polaire induit des tensions à travers le circuit ou enroulement de détection et à travers la rondelle conductrice, et où au fur et à mesure que la vitesse du mouvement du corps de matériau magnétique augmente, la tension induite à travers et le courant induit dans la rondelle conductrice augmentent, générant un champ magnétique qui s'oppose au champ dans la pièce polaire de manière à atténuer la tension induite à travers le circuit ou enroulement de détection.

2. Sonde selon la revendication 1, dans laquelle le au moins un tour de matériau conducteur comprend un enroulement.

3. Sonde selon la revendication 2, dans laquelle l'enroulement se termine par une résistance de charge et un moyen pour mesurer un signal de sortie de l'enroulement.

4. Sonde selon l'une quelconque des revendications précédentes, dans laquelle le circuit de détection comprend un circuit électrique ayant au moins un tour de matériau conducteur enroulé autour et couplé d'une manière inductive à la pièce polaire, l'arrangement étant tel que le mouvement d'un corps de matériau magnétique par rapport à la pièce polaire induit un courant dans le circuit de détection et dans une deuxième partie, à distance de la pièce polaire, qui forme un enroulement primaire de transformateur;
un enroulement secondaire de transformateur, couplé d'une manière inductive à l'enroulement primaire formé par la deuxième partie du circuit de détection et terminé par une résistance de charge et un moyen pour mesurer un signal de sortie de l'enroulement secondaire,
dans laquelle les enroulements primaire et secondaire forment un transformateur de telle sorte qu'un courant dans le circuit de détection induit une tension à travers l'enroulement secondaire; et
la rondelle est couplée d'une manière inductive à l'enroulement primaire.

5. Sonde selon l'une quelconque des revendications précédentes, dans laquelle la rondelle conductrice est fabriquée en cuivre ou en aluminium.

6. Sonde selon l'une quelconque des revendications précédentes, comprenant deux rondelles conductrices ou plus s'étendant autour de la pièce polaire.

7. Sonde aérospatiale selon l'une quelconque des revendications précédentes.

8. Moteur aéronautique comprenant une sonde selon l'une quelconque des revendications précédentes.

9. Procédé destiné à restreindre la tension à travers le circuit ou enroulement de détection d'une sonde aérospatiale pour détecter le mouvement d'un corps de matériau magnétique dans un moteur aéronautique, la sonde comprenant un aimant, une pièce polaire excitable magnétiquement adjacente et couplée magnétiquement à l'aimant, et un circuit ou enroulement de détection comprenant au moins un tour de matériau conducteur enroulé autour de la pièce polaire de telle sorte que le mouvement du matériau magnétique au-delà de la pièce polaire induit une tension à travers le circuit ou enroulement de détection,
le procédé comprenant l'étape consistant à fournir une rondelle conductrice s'étendant autour de la pièce polaire de telle sorte que, en emploi, le mouvement du corps de matériau magnétique au-delà de la pièce polaire induit des tensions à travers le circuit ou enroulement de détection et à travers la rondelle conductrice, et dans lequel au fur et à mesure que la vitesse du mouvement du corps de matériau magnétique augmente, la tension induite à travers et le courant induit dans la rondelle conductrice augmentent, générant un champ magnétique qui s'oppose au champ dans la pièce polaire de manière à atténuer la tension induite à travers le circuit ou enroulement de détection.
